# EUROPÄISCHE PATENTSCHRIFT

(11) **EP 2 309 351 B1**
(45) Veröffentlichungstag und Bekanntmachung des Hinweises auf die Patenterteilung: **12.12.2012**
(21) Anmeldenummer: 09172776.8
(22) Anmeldetag: 12.10.2009
(51) Int. Cl.: G05B 9/02

(54) **Sicherheitssteuerung**
Safety control
Commande de sécurité

(43) Veröffentlichungstag der Anmeldung: 13.04.2011
(73) Patentinhaber: SICK AG, 79183 Waldkirch (DE)
(72) Erfinder: Haberstroh, Frank, 79183, Waldkirch (DE); Cellier, Cyril, 79183, Waldkirch (DE)
(74) Vertreter: Ludewigt, Christoph

(56) Entgegenhaltungen:
- US-A1- 2003 030 330
- US-B1- 6 246 318

## Beschreibung

Die Erfindung betrifft eine Sicherheitssteuerung nach dem Oberbegriff von Anspruch 1 sowie ein Verfahren zum Einstellen einer Betriebsart einer solchen Sicherheitssteuerung.

Eine Sicherheitssteuerung ist eine Vorrichtung, die von Signalgebern, wie Lichtschranken oder Lichtgitter, Not-Aus-Taster oder Schutztürschalter, gelieferte Eingangssignale aufnimmt und daraus durch logische Verknüpfungen Ausgangssignale erzeugt. Die Ausgangssignale können dann Aktuatoren zugeführt werden, die in Abhängigkeit von den Eingangssignalen gezielte Aktionen oder Reaktionen in der Umgebung bewirken, z. B. um eine Maschine, wie eine Presse oder einen Schweißroboter, von der im Betrieb eine Gefahr für Menschen ausgeht, abzusichern. Beim Ansprechen eines Signalgebers, z. B. beim Ansprechen eines Sensors, Öffnen der Schutztür, Betätigen des Not-Aus-Tasters, wird jeweils ein Signal erzeugt, das der Sicherheitssteuerung als Eingangssignal zugeführt ist. In Reaktion darauf schaltet die Sicherheitssteuerung dann beispielsweise mit Hilfe eines Aktuators den gefahrbringenden Teil der Maschine ab bzw. setzt die Maschine in einen gefahrlosen Zustand. Neben den Anschlüssen für die Signalgeber weist die Sicherheitssteuerung zumeist noch weitere Anschlüsse auf, wie z. B. Reset-Eingänge, über die die Sicherheitssteuerung manuell oder automatisch gestartet werden kann. Die Signalgeber selbst können häufig zur Querschlusserkennung über Testsignale getestet werden, wozu die Sicherheitssteuerung Testsignal-Ausgänge und Testsignal-Eingänge aufweist.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der gefahrbringenden Anlage oder Maschine gewährleisten muss. Daher werden bei Sicherheitssteuerungen extrem hohe Anforderungen an die eigene Fehlersicherheit gestellt, was einen erheblichen Aufwand bei der Entwicklung und Herstellung zur Folge hat. Die Sicherheitssteuerung muss dabei vorgegebene Sicherheitsstandards einhalten, die beispielsweise in der europäischen Norm EN 954-1 bzw. ISO 13849 (performance level) definiert sind. Die möglichen Sicherheitsstufen und die weiteren Sicherheitsanforderungen an eine Anwendung sind z. B. in der Norm EN 61508 bzw. EN 62061 definiert.

Um die Signale der Signalgeber korrekt verarbeiten zu können, muss die Sicherheitssteuerung "wissen", welche Art von Signalgeber an einem jeweiligen Anschluss angeschlossen ist oder anders ausgedrückt, es muss die passende Betriebsart eingestellt sein, so dass die Anschlüsse richtig konfiguriert sind und korrekt ausgewertet werden.

Bekannte Sicherheitssteuerungen verwenden nachfolgende Methoden der Betriebsarteneinstellung:
Mittels eines oder mehrerer Dippschalter kann der Nutzer zwischen den möglichen Konfigurationen wählen. Die Auswertung der Dippschalterstellung erfolgt digital in der Auswerteeinheit der Sicherheitssteuerung. Um Manipulationen zu verhindern, wird teilweise das Verändern der Schalter nur während eines gleichzeitigen Drücken der einen Teachtaste akzeptiert. Nachteilig daran ist allerdings, dass Dippschalter relativ einfach zu manipulieren sind und eine Bedienung der Dippschalter, insbesondere mit zusätzlicher Teachtaste eine erschwerte Bedienung und auch zusätzliche Bauteilkosten bedeutet.

In einer anderen Möglichkeit wählt der Benutzer zwischen den möglichen Konfigurationen mittels eines oder mehreren stufig einstellbaren Drehpotentiometern. Die Auswertung solcher Drehpotentiometer erfolgt üblicherweise analog. Auch hier kann zur Verhinderung von Manipulationen ein gleichzeitiges Drücken einer Teachtaste erforderlich sein. Drehpotentiometer haben daher dieselben Nachteile wie Dippschalter.

Weiter ist bekannt die Betriebsart mittels Software einzustellen, wobei die Sicherheitssteuerung dazu über eine Kommunikationsschnittstelle mit einem Computer verbunden werden muss. Eine schnelle und einfache Inbetriebnahme ist nicht möglich. Des Weiteren ist immer ein PC für die Inbetriebnahme notwendig.

Eine weitere Möglichkeit der Betriebsarteneinstellung ist die feste Voreinstellung (zum Beispiel während der Produktion) durch Lötbrücken oder durch Downloads unterschiedlicher Firmwareprogramme. Hier wird die Betriebsart ab Werk festgelegt, so dass eine Vielzahl von Varianten vorrätig sein muss, was beim Hersteller einen erheblichen Aufwand und insgesamt auf Kunden- und Herstellerseite auch eine hohe Lagerhaltung bedeutet.

Aus der EP-A 1 269 274 ist schließlich ein Verfahren zum Einstellen von Betriebsarten bekannt, bei dem ein separater Signaleingang bereitgestellt wird, und die Sicherheitssteuerung zwischen verschiedenen definierten Eingangssignalen an diesem zusätzlichen Eingang unterscheiden kann und daran erkennt, welche Betriebsart einzustellen ist. Nachteilig daran ist, dass ein zusätzlicher Eingang vorgesehen sein muss, der Bauraum benötigt. Außerdem muss ein geeignetes Gerät zur Verfügung stehen, das die entsprechenden Signale für die verschiedenen Betriebsarten ausgibt, wodurch insgesamt der Aufwand auch bei dieser Lösung sehr hoch ist.

Aus der US 6,246,318 B1 ist es bekannt zur Erkennung von angeschlossenen Signalgebern eine Vielzahl von Eingangs- und/oder Ausgangsanschlüssen für die Signalgeber vorzusehen und zur Erkennung eines angeschlossenen Signalgebers die einzelnen Verbindungen von Eingängsanschlüssen zu Ausgangsanschlüssen durchzutesten. Je nach dem welcher der Eingänge mit welchem Ausgang verbunden ist, entspricht dies einem bestimmten Signalgebertyp.

Davon ausgehend ist es Aufgabe der Erfindung, eine kostengünstige Sicherheitssteuerung, bei welcher die Betriebsart in einfacher Weise einstellbar ist und ein Verfahren zum einfachen Einstellen der Betriebsart, bereitzustellen.

Diese Aufgabe wird gelöst durch eine Sicherheitssteuerung mit Anschlüssen für Signalgeber, einer Auswerteeinheit zur Auswertung von an den Anschlüssen anliegenden Signalgebersignalen, wenigstens einem Sicherheitsschaltausgang und mit einer Betriebsarteneinstelleinheit, die die Betriebsart der Sicherheitssteuerung einstellt, wobei erfindungsgemäß die Betriebsarteneinstelleinheit eine Eingangssignalerkennungseinheit aufweist, mit der die Betriebsarteneinstelleinheit erkennen kann, welche Art Signalgeber mit den Anschlüssen verbunden ist oder sind und wobei die Anschlüsse Signalgebereingänge und Signalgeberausgänge umfassen, wobei die Signalgebereingänge zwei OSSD-Eingänge, an denen die Sicherheitssignale des Signalgebers anliegen und wenigstens einen Reset-Eingang aufweisen, und die Signalgeberausgänge als Testausgänge ausgebildet sind.

Verfahrensmäßig wird die Aufgabe gelöst durch ein Verfahren zum Einstellen einer Betriebsart einer Sicherheitssteuerung mit folgenden Schritten:
- Bereitstellen der Sicherheitssteuerung,
- Anschließen wenigstens eines Signalgebers an Anschlüsse der Sicherheitssteuerung,
- Starten eines Betriebsarteneinstellvorgangs,
- Abfragen der Anschlüsse,
- Bestimmen der Art des angeschlossenen Signalgebers,
- Einstellen einer Betriebsart,
- Beenden des Betriebsarteneinstellvorgangs
- wobei beim Abfragen der Anschlüsse die angeschlossenen Signalgeber in ihrem aktiven Zustand bzw. im Falle des Reset in ihrem nichtbetätigten Zustand sind.

Bei der Sicherheitssteuerung kann es sich um ein Sicherheitsschaltgerät handeln, wie es beispielsweise aus der vorgenannten EP-A 1 269 274 bekannt ist oder auch um eine Steuerung, die ein Sicherheitsrelais als Schaltelement enthält.

In der erfindungsgemäßen Ausbildung erkennt die Sicherheitssteuerung selbsttätig, welche Art Signalgeber angeschlossen ist oder sind bzw. ob und welche Art Reset (automatisch oder manuell) gewählt ist. Dies erfolgt, indem die Betriebsarteneinstelleinheit die angeschlossenen Geräte, die vorzugsweise in ihrem aktiven Zustand bzw. beim Reset in ihrem nichtbetätigten Zustand sind, abfragt, indem z. B. einerseits detektiert wird, welche Signale an den Anschlüssen aktuell anliegen und/oder andererseits, indem Testsignale an den Signalgeber gesandt werden und die Reaktion des Signalgebers auf diese Testsignale an den Anschlüssen detektiert wird. Wenn der Sicherheitssteuerung nach der Erkennung bekannt ist, welche Art Signalgeber angeschlossen ist, kann die entsprechende Betriebsart eingestellt werden, damit die Signale der Signalgeber korrekt ausgewertet werden.

Diese automatische Erkennung der benötigten Betriebsart spart separate Dippschalter oder zusätzliche Eingänge und damit Bauteilkosten. Aufgrund der einfachen Bedienung, indem nur noch eine Teachtaste zum Einleiten der Betriebsarteneinstellung gedrückt werden muss, kann Zeit und damit Kosten bei der Installation gespart werden. Manipulationen werden erschwert, da ein Verändern der Konfiguration nur über nochmaliges Starten der automatischen Betriebsarteneinstellung möglich ist.

Dabei kann in einer Weiterbildung der Erfindung an einer Teach-Anzeige angezeigt werden, ob die Betriebsarteneinstelleinheit aktiv ist oder nicht. An einer Betriebsartenanzeige, die die dieselbe Anzeige oder eine separate sein kann, kann schließlich die eingestellte Betriebsart angezeigt werden.

Die Anzeigen können optische Anzeigen sein, z. B. eine oder mehrere LEDs, die gegebenenfalls Symbole beleuchten. Auch ein aufwändigeres Display wäre denkbar, das aber die Kosten erhöhen würde.

Die Sicherheitssteuerung kann in einer Ausbildung in bekannter Weise modulartig aufgebaut sein und aus nur einem oder mehreren Modulen bestehen, wobei das wenigstens eine Modul die Anschlüsse aufweist. Dabei ist dieses Modul bevorzugt als Einschub zur Befestigung auf einer Standard-Hutschiene ausgebildet und die Anschlüsse und optionale Anzeigen bzw. die Teachtaste befinden sich bevorzugt auf der Frontseite.

Die Anschlüsse sind bevorzugt als Signalgebereingänge, z. B. OSSD-Eingänge, an denen die Sicherheitssignale des Signalgebers anliegen, Testsignaleingänge, Reset-Eingänge und/oder als Signalgeberausgänge wie Testausgänge, ausgebildet.

Wenn der Betriebsarteneinstellvorgang aktiv ist, ist der Sicherheitsschaltausgang der Sicherheitssteuerung bevorzugt abgeschaltet, um die Sicherheit zu gewährleisten.

Die Erfindung wird nachstehend auch hinsichtlich weiterer Merkmale und Vorteile beispielhaft anhand von Ausführungsbeispielen unter Bezugnahme auf die Zeichnung näher erläutert. In der Zeichnung zeigen:
- Fig. 1: eine schematische Darstellung einer erfindungsgemäßen Sicherheits- steuerung;
- Fig. 2 bis 6: schematische Darstellungen der Sicherheitssteuerung mit verschie- denen angeschlossenen Signalgebern bzw. mit verschiedenen An- schlüssen für ein Resetsignal.

Eine erfindungsgemäße Sicherheitssteuerung 10 weist in den in den Figuren dargestellten Ausführungsbeispielen einerseits Strom-/ Spannungsversorgungsanschlüsse 12 und 14 sowie Anschlüsse 16, 18, 20, 22, 24 auf, die mit IN_A, IN_B, T1, T0, IN_R bezeichnet sind, und andererseits einen Sicherheitsschaltausgang 26.

Der Sicherheitsschaltausgang 26 ist in bekannter Weise zweikanalig aufgebaut mit einem ersten Schaltkanal OSSD1 an einem Ausgang 28 und einem zweiten, redundanten Schaltkanal OSSD2 an einem Ausgang 30, wobei "OSSD" bekanntermaßen für "Output Signal Switching Device" steht.

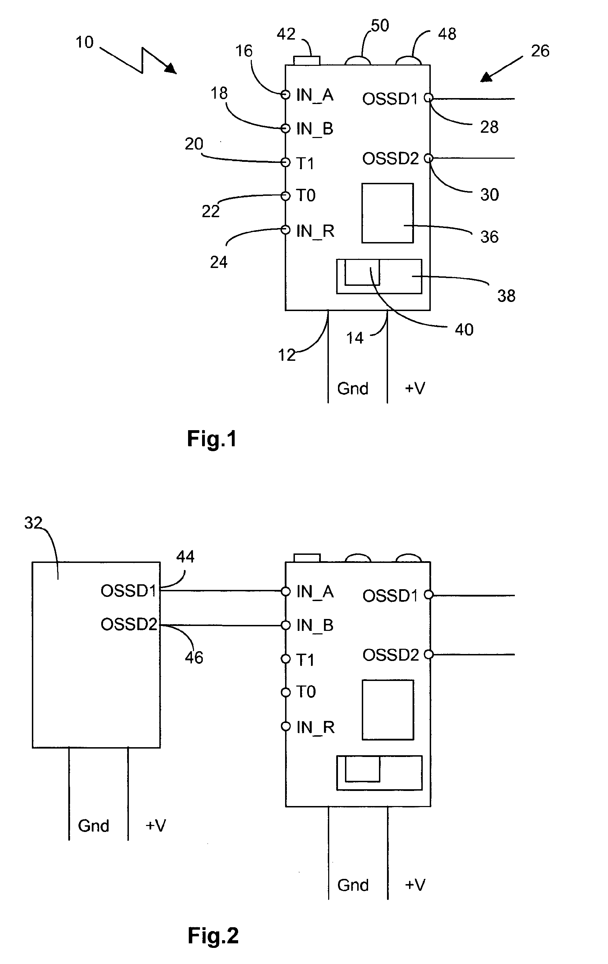

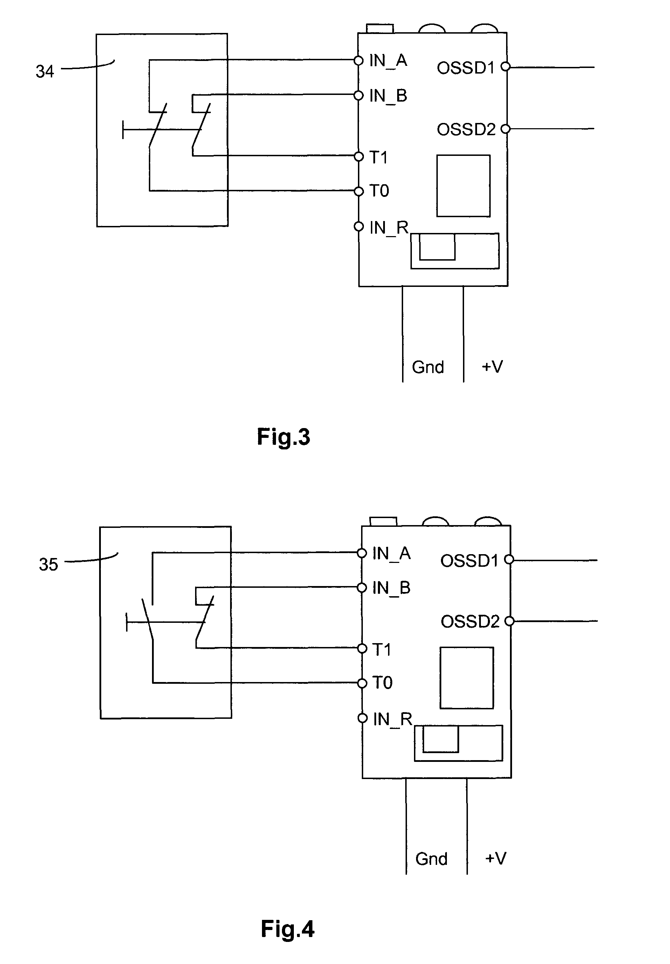

Die Anschlüsse 16 und 18 dienen zur Aufnahme von OSSD-Sicherheitsschaltsignalen eines daran angeschlossenen Signalgebers 32 (Fig. 2), der beispielsweise eine Lichtschranke, ein Lichtgitter, Lichttaster, Sicherheitsschalter, Türschalter, Not-Aus-Taster oder dergleichen sein kann. Die Anschlüsse 20 und 22 sind Testausgänge, an denen Testsignale anliegen, die z. B. zum Testen eines Schalters oder Not-Aus-Tasters 34 (Fig. 3) oder dergleichen benötigt werden. Der Anschluss 24 schließlich dient der Aufnahme eines Resetsignals, so dass beispielsweise nach einem Abschalten dann ein Reset erfolgt, wenn an dem Anschluss 24 ein Signal mit Betriebsspannungspegel +V anliegt.

Neben diesen fünf Anschlüssen können weitere Anschlüsse vorgesehen sein, die ggf. wie IN_A, IN_B, T1, T0 oder IN_R ausgebildet sind, z. B. zum Anschluss weiterer Signalgeber.

Des Weiteren weist die Sicherheitssteuerung 10 eine Auswerteeinheit 36 auf, die im Arbeitsbetrieb die an den Anschlüssen 16, 18, 20, 22, 24 und ggf. an weiteren Anschlüssen anstehende Signale auswertet und in Abhängigkeit davon OSSD-Sicherheitschaltsignale an dem Schaltausgang 26 bereitstellt.

Neben oder als Teil der Auswerteeinheit 36 ist eine Betriebsarteneinstelleinheit 38 vorgesehen, mit der die Betriebsart der Sicherheitssteuerung 10 einstellbar ist. Erfindungsgemäß weist die Betriebsarteneinstelleinheit 38 eine Eingangssignalerkennungseinheit 40 auf, mit der die Betriebsarteneinstelleinheit 38 erkennen kann, welche Art Signalgeber mit den Anschlüssen 16,18, 20, 22, 24 verbunden ist. Dies sei im Weiteren anhand verschiedener Beispiele, in denen unterschiedliche Signalgeber an den Anschlüssen angeschlossen sind, erläutert.

Zunächst wird mittels einer Teachtaste 42 ein Betriebsarteneinstellvorgang gestartet.

In einem ersten Beispiel nach Fig. 2 ist eine Lichtschranke 32 an den Anschlüssen 16 und 18 angeschlossen. Während des Betriebsarteneinstellvorgangs ist die Lichtschranke 32 in ihrem aktiven Zustand, das heißt auf ihren Sicherheitsschaltausgängen 44 und 46 liegen Schaltspannungen an. Von der Eingangssignalerkennungseinheit 40 der Betriebsarteneinstelleinheit 38 wird nun erkannt, dass an den Anschlüssen 16 und 18 das Schaltpotential anliegt. Somit wird von der Betriebsarteneinstelleinheit 38 letztlich erkannt, dass an den Anschlüssen 16 bis 24 ein Signalgeber angeschlossen ist, der lediglich an den Anschlüssen 16 und 18 OSSD-Schaltsignale bereitstellt, und die Betriebsarteneinstelleinheit kann die entsprechende Betriebsart dafür einstellen.

In einem zweiten Beispiel nach Fig. 3 ist ein zweikanaliger Not-Aus-Taster 34 an den Anschlüssen 16,18, 20, 22 angeschlossen. Durch Testsignale, die an den Anschlüssen 20 und 22 bereitgestellt werden, kann die Eingangssignalerkennungseinheit 40 durch Rücklesen dieser Testsignale an den Anschlüssen 16 und 18 erkennen, dass es sich um einen zweikanaligen Schalter handelt und die dafür entsprechende Betriebsart einstellen.

In einem dritten Beispiel nach Fig. 4 ist ein zweikanaliger Sicherheitsschalter an den Anschlüssen 16,18, 20, 22 angeschlossen. Es handelt sich hier um einen Sicherheitsschalter, der antivalent ausgewertet werden muss, d. h. ein Kanal des Schalters muss stets geschlossen sein, wenn der andere geöffnet ist. Durch Testsignale, die an den Anschlüssen 20 und 22 bereitgestellt werden, kann die Eingangssignalerkennungseinheit 40 durch Rücklesen dieser Testsignale an den Anschlüssen 16 und 18 erkennen, dass es sich um einen solchen Schalter handelt und die dafür entsprechende Betriebsart einstellen.

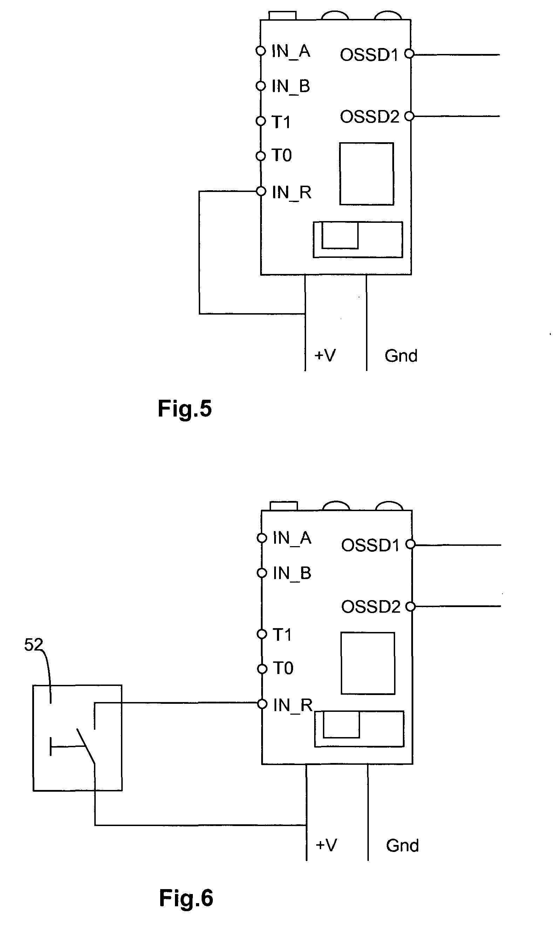

In einem dritten Beispiel nach Fig. 5 sind die Anschlüsse 16 bis 24 derart verschaltet, dass ein automatischer Reset erfolgt. Dazu ist an den Anschluss 24 die Betriebsspannung direkt angeschlossen. Aufgrund des permanent anliegenden Betriebsspannungspotenzials an dem Anschluss 24 erkennt die Eingangssignalerkennungseinheit 40, dass ein automatisches Reset eingestellt werden soll, unabhängig von den Anschlüssen 16 bis 22.

Im einem vierten Beispiel entsprechend Fig. 6 ist schließlich das Betriebsspannungspotenzial über einen Reset-Taster 52 an den Anschluss 24 angeschlossen. Die Eingangssignalerkennungseinheit 40 erkennt also, dass kein Betriebspotenzial am Anschluss 24 anliegt, und die Betriebsarteneinstelleinheit 38 stellt deshalb eine Betriebsart "manueller Reset" ein. Diese Reset-Einstellung ist wieder unabhängig von den Anschlüssen 16 bis 22.

Während der Einstellung der Betriebsart ist der Sicherheitsschaltausgang 26 der Sicherheitssteuerung 10 abgeschaltet.

Nachdem die Betriebsarten eingestellt wurden, können diese an einer Betriebsartenanzeige 48 angezeigt werden. Die Betriebsartenanzeige 48 kann aus einer oder mehreren LEDs bestehen, wobei diese LEDs gegebenenfalls Symbole oder Schriftzüge hinterleuchten, so dass der Anwender ablesen kann, welche Betriebsarten eingestellt sind. Optional kann mit einer weiteren Anzeige 50 angezeigt werden, ob die Sicherheitssteuerung 10 sich im Betriebsarteneinstellmodus befindet oder nicht, so dass der Anwender erkennen kann, wann die Betriebsart fertig eingestellt ist.

Sind alle Anschlüsse ausgewertet und die entsprechende Betriebsart eingestellt, wird der Betriebsarteneinstellvorgang beendet. Dies kann automatisch erfolgen, oder der Anwender kann dann durch erneutes Drücken und Loslassen der Teachtaste 42 die Konfiguration akzeptieren oder beispielsweise durch Ausschalten der Sicherheitssteuerung 10 die Konfiguration ablehnen.

## Patentansprüche

1. Sicherheitssteuerung mit Anschlüssen (16, 18, 20, 22, 24) für Signalgeber (32, 34, 52), einer Auswerteeinheit (36) zur Auswertung von an den Anschlüssen (16, 18, 20, 22, 24) anliegenden Signalgebersignalen, wenigstens einem Sicherheitsschaltausgang (26, 28, 30) und mit einer Betriebsarteneinstelleinheit (38), die die Betriebsart der Sicherheitssteuerung (10) einstellt, **dadurch gekennzeichnet, dass** die Betriebsarteneinstelleinheit (38) eine Eingangssignalerkennungseinheit (40) aufweist, mit der die Betriebsarteneinstelleinheit (38) erkennen kann, welche Art Signalgeber (32, 34, 52) mit den Anschlüssen (16, 18, 20, 22, 24) verbunden ist oder sind, wobei die Anschlüsse (16, 18, 20, 22, 24) Signalgebereingänge (IN_A, IN_B, IN_R) und Signalgeberausgänge (T0, T1) umfassen, wobei die Signalgebereingänge (IN_A, IN_B, IN_R) zwei OSSD-Eingänge, an denen die Sicherheitssignale des Signalgebers anliegen und wenigstens einen Reset-Eingang aufweisen, und die Signalgeberausgänge (T0, T1) als Testausgänge ausgebildet sind.

2. Sicherheitssteuerung nach Anspruch 1, **dadurch gekennzeichnet, dass** eine Teachtaste (42) vorgesehen ist.

3. Sicherheitssteuerung nach einem der vorhergehenden Ansprüche, **dadurch gekennzeichnet, dass** eine Betriebsartenanzeige (48) zur Anzeige der eingestellten Betriebsart vorgesehen ist.

4. Sicherheitssteuerung nach einem der vorhergehenden Ansprüche, **dadurch gekennzeichnet, dass** eine Teach-Anzeige (50) vorgesehen ist, die anzeigt, ob die Betriebsarteneinstelleinheit (38) aktiv ist.

5. Sicherheitssteuerung nach einem der vorhergehenden Ansprüche, **dadurch gekennzeichnet, dass** diese wenigstens ein Modul aufweist und die Anschlüsse an dem Modul angeordnet sind.

6. Verfahren zum Einstellen einer Betriebsart einer Sicherheitssteuerung mit folgenden Schritten:
- Bereitstellen der Sicherheitssteuerung (10),
- Anschließen wenigstens eines Signalgebers (32, 34, 52) an Anschlüsse (16, 18, 20, 22, 24) der Sicherheitssteuerung (10), wobei die Anschlüsse (16, 18, 20, 22, 24) Signalgebereingänge (IN-A, IN_B, IN_R) und Signalgeberausgänge (T0, T1) umfassen, wobei die Signalgebereingänge (IN_A, IN_B, IN_R) zwei OSSD-Eingänge, an denen die Sicherheitssignale des Signalgebers anliegen und wenigstens einen Reset-Eingang aufweisen, und die Signalgeberausgänge (T0, T1) als Testausgänge ausgebildet sind,
- Starten eines Betriebsarteneinstellvorgangs,
- Abfragen der Anschlüsse (16, 18, 20, 22, 24),
- Bestimmen der Art des angeschlossenen Signalgebers (32, 34, 52),
- Einstellen einer Betriebsart,
- Beenden des Betriebsarteneinstellvorgangs
wobei beim Abfragen der Anschlüsse (16, 18, 20, 22, 24) die angeschlossenen Signalgeber (32, 34, 52) in ihrem aktiven Zustand bzw. im Falle des Reset in ihrem nichtbetätigten Zustand sind.

7. Verfahren nach Anspruch 6, **dadurch gekennzeichnet, dass** angezeigt wird, ob der Betriebsarteneinstellvorgang aktiv ist oder nicht und dass die eingestellte Betriebsart an einer Betriebsartenanzeige (50) angezeigt wird.

8. Verfahren nach einem der vorhergehenden Ansprüche 6 oder 7, **dadurch gekennzeichnet, dass** während des Betriebsarteneinstellvorgangs der Sicherheitsschaltausgang (26, 28, 30) der Sicherheitssteuerung (10) abgeschaltet ist.

## Claims

1. A safety controller having connectors (16, 18, 20, 22, 24) for signal generators (32, 34, 52), having an evaluation unit (36) for evaluating signal generator signals applied to the connectors (16, 18, 20, 22, 24), having at least one safety switch output (26, 28, 30) and having an operating mode setting unit (38) which sets the operating mode of the safety controller (10), **characterised in that** the operating mode setting unit (38) has an input signal recognition unit (40) with which the operating mode setting unit (38) can recognise which type of signal generator(s) (32, 34, 52) is or are connected to the connectors (16, 18, 20, 22, 24), with the connectors (16, 18, 20, 22, 24) including signal generator inputs (IN_A, IN_B, IN_R) and signal generator outputs (T0, T1), with the signal generator inputs (IN_A, IN_B, IN_R) having two OSSD inputs at which the safety signals of the signal generator are applied and having at least one reset input, and with the signal generator outputs (T0, T1) being formed as test outputs.

2. A safety controller in accordance with claim 1, **characterised in that** a teach button (42) is provided.

3. A safety controller in accordance with one of the preceding claims, **characterised in that** an operating mode display (48) is provided for the display of the set operating mode.

4. A safety controller in accordance with any one of the preceding claims, **characterised in that** a teach display (50) is provided which displays whether the operating mode setting unit (38) is active.

5. A safety controller in accordance with any one of the preceding claims, **characterised in that** it has at least one module and the connectors are arranged at the module.

6. A method of setting an operating mode of a safety controller comprising the following steps:
- providing the safety controller (10);
- connecting at least one signal generator (32, 34, 52) to connectors (16, 18, 20, 22, 24) of the safety controller (10), wherein the connectors (16, 18, 20, 22, 24) include signal generator inputs (IN_A, IN_B, IN_R) and signal generator outputs (T0, T1), wherein the signal generator inputs (IN_A, IN_B, IN_R) have two OSSD inputs at which the safety signals of the signal generator are applied and have at least one reset input and the signal generator outputs (T0, T1) are formed as test outputs;
- starting an operating mode setting procedure;
- polling the connectors (16, 18, 20, 22, 24);
- determining the type of the connected signal generator (32, 34, 52);
- setting an operating mode;
- terminating the operating mode setting procedure.
wherein, on the polling of the connectors (16, 18, 20, 22, 24), the connected signal generators (32, 34, 52) are in their active state or, in the case of the reset, in their non-activated state.

7. A method in accordance with claim 6, **characterised in that** it is displayed whether the operating mode setting procedure is active or not; and **in that** the set operating mode is displayed at an operating mode display (50).

8. A method in accordance with either one of the preceding claims 6 or 7, **characterised in that** the safety switch output (26, 28, 30) of the safety controller (10) is switched off during the operating mode setting procedure.

## Revendications

1. Commande de sécurité comprenant des connecteurs (16, 18, 20, 22, 24) pour des émetteurs de signaux (32, 34, 52) dans une unité d'évaluation (36) pour évaluer des signaux d'émetteurs appliqués aux connecteurs (16, 18, 20, 22, 24), comprenant au moins une sortie de commutation de sécurité (26, 28, 30) et comprenant une unité de fixation de mode de fonctionnement (38) qui fixe le mode de fonctionnement de la commande de sécurité (10), **caractérisée en ce que** l'unité de fixation de mode de fonctionnement (38) comprend une unité de reconnaissance de signal d'entrée (40) au moyen de laquelle l'unité de fixation de mode de fonctionnement (38) peut reconnaître le type d'émetteur(s) de signaux (32, 34, 52) qui est/sont relié(s) aux connecteurs (16, 18, 20, 22, 24), les connecteurs (16, 18, 20, 22, 24) comprenant des entrées aux émetteurs de signaux (IN_A, IN_B, IN_R) et des sorties des émetteurs de signaux (T0, T1), les entrées aux émetteurs de signaux (IN_A, IN_B, IN_R) comprenant deux entrées OSSD auxquelles sont appliqués les signaux de sécurité de l'émetteur de signaux, et au moins une entrée de remise à zéro, et les sorties des émetteurs de signaux (T0, T1) sont réalisées comme des sorties de test.

2. Commande de sécurité selon la revendication 1, **caractérisée en ce qu'**il est prévu une touche d'apprentissage (42).

3. Commande de sécurité selon l'une des revendications précédentes, **caractérisée en ce qu'**il est prévu un affichage de mode de fonctionnement (48) pour afficher le mode de fonctionnement fixé.

4. Commande de sécurité selon l'une des revendications précédentes, **caractérisée en ce qu'**il est prévu un affichage d'apprentissage (50) qui affiche si l'unité de fixation de mode de fonctionnement (38) est active.

5. Commande de sécurité selon l'une des revendications précédentes, **caractérisé en ce que** celle-ci comprend un module, et les connecteurs sont agencés sur le module.

6. Procédé pour fixer un mode de fonctionnement d'une commande de sécurité, comprenant les étapes suivantes :
- on fournit la commande de sécurité (10),
- on raccorde au moins un émetteur de signaux (32, 34, 52) à des connecteurs (16, 18, 20, 22, 24) de la commande de sécurité (10), les connecteurs (16, 18, 20, 22, 24) comprenant des entrées aux émetteurs de signaux (IN_A, IN_B, IN_R) et des sorties des émetteurs de signaux (T0, T1), dans lesquelles les entrées aux émetteurs de signaux (IN_A, IN_B, IN_R) comprennent deux entrées OSSD auxquelles sont appliqués les signaux de sécurité de l'émetteur de signaux, et au moins une entrée de remise à zéro, et les sorties des émetteurs de signaux (T0, T1) sont réalisés comme des sorties de test,
- on démarre un processus de fixation de mode de fonctionnement,
- on interroge les connecteurs (16, 18, 20, 22, 24),
- on détermine le type de l'émetteur de signaux (32, 34, 52) raccordé,
- on fixe un mode de fonctionnement,
- on termine le processus de fixation de mode de fonctionnement,
dans lequel lors de l'interrogation des connecteurs (16, 18, 20, 22, 24) les émetteurs de signaux (32, 34, 52) raccordés sont dans leur état actif ou respectivement dans le cas de la remise à zéro, ils sont dans leur état non actif.

7. Procédé selon la revendication 6, **caractérisé en ce que** l'on affiche si le processus de fixation de mode de fonctionnement est actif ou non, et **en ce que** le mode de fonctionnement fixé est affiché sur un affichage de mode de fonctionnement (50).

8. Procédé selon l'une des revendications précédentes 6 ou 7, **caractérisé en ce que** pendant le processus de fixation de mode de fonctionnement la sortie de commutation de sécurité (26, 28, 30) de la commande de sécurité (10) est mise hors service.
